# EUROPEAN PATENT APPLICATION

(11) **EP 0 812 618 A2**
(43) Date of publication of application: **17.12.1997**
(21) Application number: 97109697.9
(22) Date of filing: 13.06.1997
(51) Int. Cl.: B01J 20/28, B01D 17/02, C02F 1/40

(54) **Resin fibers for treatment of oil bearing waste water and method of treating oil bearing waste water**

(30) Priority: 13.06.1996 JP 152671/96
(71) Applicant: NEC CORPORATION, Tokyo (JP)
(72) Inventor: Ishikawa, Yoshiaki, Ichinoseki-shi, Iwate (JP); Sato, Katsuhiro, Ichinoseki-shi, Iwate (JP); Suzuki, Katsunori, Ichinoseki-shi, Iwate (JP)
(74) Representative: Glawe, Delfs, Moll & Partner

(57) **Abstract**

A resin fiber to be used for treatment of oil bearing waste water, wherein the resin fiber has a molecular structure having a characteristic group which is positively charged when exposed to oil bearing waste water, or wherein the resin fiber is made of a polymer polymerized with monomers having a characteristic group which is positively charged when exposed to oil bearing waste water, or wherein the resin fiber is made of a copolymer polymerized with acrylonitrile and monomers having a characteristic group which is positively charged when exposed to oil bearing waste water. It is preferable that a compositional ratio of the monomers having the characteristic group is in the range of 5-30%.

## Description

The present invention relates to resin fibers for treatment of an oil bearing waste water and a method of treating an oil bearing waste water, wherein oil drops in the oil bearing waste water are adsorbed into a resin fiber network-structure for separation and removal of said oil drops from the oil bearing waste water.

Various methods for treating the oil bearing waste water were proposed wherein resin fibers made of polyester, nylon and acryl and polyolefine are available for treatment of the oil bearing waste water.

In the Japanese laid-open patent publication No. 59-169519, it is disclosed that the oil bearing waste water is filtered through a resin fiber network-structure in the form of a sheet which has a permeability in the range of 20-400 cc/cm² sec., for removal of oil drops from the oil bearing waste water.

Various resin fibers are available such as polyester fibers, nylon fibers, acryl fibers and polyolefine fibers as well as fibers combined with other fibers or those fibers combined with a small amount of either natural fiber or semi-synthetic fiber.

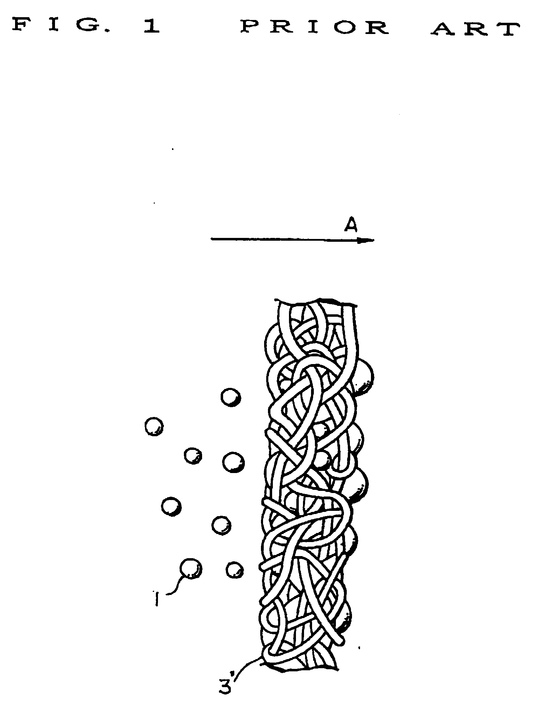

FIG. 1 is a view illustrative of a resin fiber network-structure adsorbed with oil drops in the oil bearing waste water for separation and removal of said oil drops from the oil bearing waste water.

A resin fiber network-structure 3' exists in the oil bearing waste water which is flowing in a direction represented by an arrow mark "A". The resin fiber network-structure 3' has a network structure as illustrated in FIG. 1. The network structure has such a small gap that the waste water may pass through the resin fiber network-structure 3' whilst oil drops 1 in the oil bearing waste water may be adsorbed within the gaps of the resin fiber network-structure 3'.

In the Japanese laid-open patent publication No. 58-22394, it is disclosed that polystyrene fibers are pretreated with a nonionic surfactant such as polyoxyethylene, alkyls or ethers to adsorb a surface of the resin fiber with a material having a large affinity with oil drops, particularly emulsifying oils finely dispersed for improvement in adsorption ability of the resin fiber. This technique was highly attractive.

By the way, the oil drop 1 in the oil bearing waste water usually contains emulsifying oils finely dispersed in the form of colloid of not more than a few micrometers in diameter in addition to oil drops of not less than about 10 micrometers dispersed by physical forces caused by convection currents and stirring.

If punched parts adsorbed process oils and machine oils are subjected to a ultrasonic cleaning with an ion-exchange water heated at a temperature of not less than 40°C, then the oil bearing waste water is produced which contains emulsifying oils of not more than 1 micrometer in diameter.

It is insufficient for removal of the emulsifying oils from the oil bearing waste water to use the prior art disclosed in the Japanese laid-open patent publication No. 59-169519, wherein the oils are simply tried to be adsorbed by the resin fiber network structure. In order to obtain the desirable effect, it is required that the resin fiber network structure has a low permeability of not more than 20 cc/cm² sec. If this requirement for such low permeability is satisfied, then there are, however, raised a problem with so large pressure loss as unavailable. If, by contrast, the permeability of the resin fiber network structure were not less than 20 cc/cm² sec., then there is no problem as described above but it is difficult to obtain a sufficient for removal of removal of the emulsifying oils from the oil bearing waste water.

On the other hand, the description will be again directed to the other prior art described above and disclosed in the Japanese laid-open patent publication No. 58-22394, wherein the nonionic surfactant is, however, insecurely adsorbed on the resin fibers, for which reason when the resin fiber network structure is exposed to the flow of the oil bearing waste water, the nonionic surfactant may be released from the surface of the resin fibers. If the nonionic surfactant has been released from the surface of the resin fibers, this means that the oil drops adsorbed on the nonionic surfactant are again dispersed into the waste water.

Further, if the nonionic surfactant is eluted into the treated waste water, then chemical oxygen demand (COD) may be risen. In this viewpoint, the release of the nonionic surfactant causes such serious problems.

In the above circumstances, it had been required to develop novel resin fibers for treatment of the oil bearing waste water and a method of treatment of the oil bearing waste water, wherein the resin fibers are capable of capturing fine emulsifying oil drops but are free from the problems as described above.

Accordingly, it is an object of the present invention to provide a novel resin fiber network structure to be used for treatment of oil bearing waste water, which is free from the problems as described above.

It is a further object of the present invention to provide a novel resin fiber network structure to be used for treatment of oil bearing waste water, which is capable of capturing fine emulsifying oil drops.

It is a sill further object of the present invention to provide a novel resin fiber network structure to be used for treatment of oil bearing waste water, which is free from the problem with a release of oil drops once captured by the resin fiber network structure during exposure of the resin fiber network structure to the flow of the waste water.

It is yet a further object of the present invention to provide a novel resin fiber network structure to be used for treatment of oil bearing waste water, which is free from the problem with rising chemical oxygen demand (COD).

It is a further more object of the present invention to provide a novel resin fiber network structure to be used for treatment of oil bearing waste water, which keeps a high adsorption ability for a long time.

It is another object of the present invention to provide a novel method of treatment of oil bearing waste water, which is free from the problems as described above.

It is still another object of the present invention to provide a novel method of treatment of oil bearing waste water, which is capable of capturing fine emulsifying oil drops.

It is yet another object of the present invention to provide a novel method of treatment of oil bearing waste water, which is free from the problem with a release of oil drops once captured by the resin fiber network structure during exposure of the resin fiber network structure to the flow of the waste water.

It is further another object of the present invention to provide a novel method of treatment of oil bearing waste water, which is free from the problem with rising chemical oxygen demand (COD).

It is moreover object of the present invention to provide a novel method of treatment of oil bearing waste water, which keeps a high adsorption ability for a long time.

The above and other objects, features and advantages of the present invention will be apparent from the following descriptions.

The present invention provides a resin fiber to be used for treatment of oil bearing waste water, wherein the resin fiber has a molecular structure having a characteristic group which is positively charged when exposed to oil bearing waste water.

The present invention also provides a resin fiber to be used for treatment of oil bearing waste water, wherein the resin fiber is made of a polymer polymerized with monomers having a characteristic group which is positively charged when exposed to oil bearing waste water.

The present invention also provides a resin fiber to be used for treatment of oil bearing waste water, wherein the resin fiber is made of a copolymer polymerized with acrylonitrile and monomers having a characteristic group which is positively charged when exposed to oil bearing waste water. It is preferable that a compositional ratio of the monomers having the characteristic group is in the range of 5-30%.

The present invention will be described in detail with reference to the accompanying drawings.

FIG. 1 is a view illustrative of the conventional resin fiber network structure to be used for treatment of oil bearing waste water.

FIG. 2 is a view illustrative of an adsorption mechanism wherein emulsifying oil drops are adsorbed into resin fibers to be used for treatment of oil bearing waste water in accordance with the present invention.

FIG. 3 is a view illustrative of an oil bearing waste water treatment system using a novel resin fiber network structure in accordance with the present invention.

FIG. 4 is a diagram illustrative of variation in oil contents of circulating water over continuous operating time in Example 1 of the present invention and in Comparative Example 1.

FIG. 5 is a diagram illustrative of variation in oil contents of circulating water over continuous operating time in Examples 2, 5, 6 and 7 of the present invention and in Comparative Example 2.

FIG. 6 is a diagram illustrative of variation in oil contents of circulating water over continuous operating time in Example 3 of the present invention and in Comparative Example 3.

FIG. 7 is a diagram illustrative of variation in oil contents of circulating water over continuous operating time in Example 4 of the present invention and in Comparative Example 4.

The present invention provides a resin fiber to be used for treatment of oil bearing waste water, wherein the resin fiber has a molecular structure having a characteristic group which is positively charged when exposed to oil bearing waste water.

The present invention also provides a resin fiber to be used for treatment of oil bearing waste water, wherein the resin fiber is made of a polymer polymerized with monomers having a characteristic group which is positively charged when exposed to oil bearing waste water.

The present invention also provides a resin fiber to be used for treatment of oil bearing waste water, wherein the resin fiber is made of a copolymer polymerized with acrylonitrile and monomers having a characteristic group which is positively charged when exposed to oil bearing waste water. It is preferable that a compositional ratio of the monomers having the characteristic group is in the range of 5-30%.

It is preferable that the characteristic group comprises at least one of selected from the group consisting of amino groups, dialkylaminomethyl groups, dialkylaminoethyl groups and dialkylaminopropyl groups.

It is also preferable that the monomers having the characteristic group comprises at least one of selected from the group consisting of acrylamide, N,N-dialkylaminomethyl-acrylamide, N,N-dialkylaminoethyl-acrylamide and N,N-dialkylaminopropyl-acrylamide.

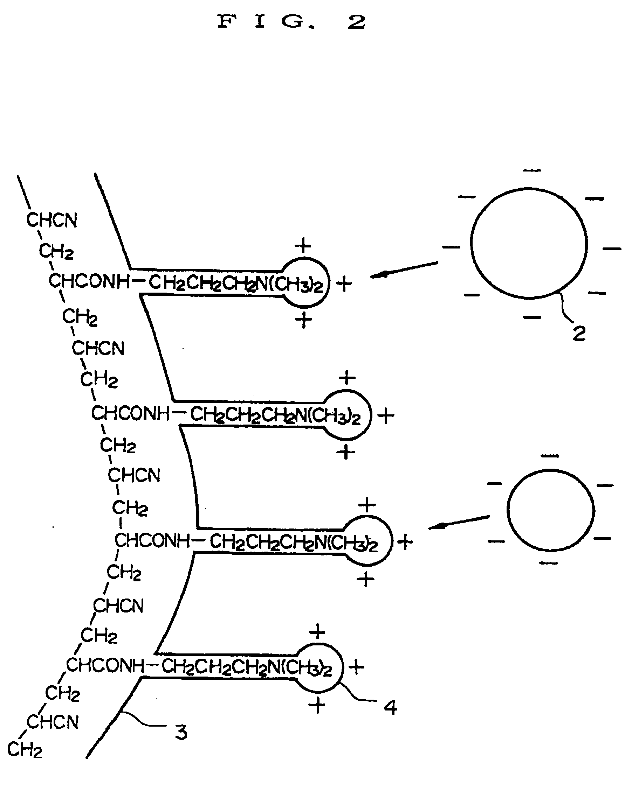

FIG. 2 is a view illustrative of an adsorption mechanism wherein emulsifying oil drops are adsorbed into resin fibers to be used for treatment of oil bearing waste water in accordance with the present invention. A resin fiber network structure comprising resin fibers 3 to be used for treatment of oil bearing waste water containing emulsifying oil drops 2. Each of the resin fibers 3 has a molecular structure having a characteristic group 4 which is positively charged when exposed to oil bearing waste water. The characteristic group 4 is dialkylaminopropyl (dimethylaminopropyl). The resin fibers 3 are made of a copolymer polymerized with N,N-dimethylaminopropyl-acrylamide and acrylonitrile.

The emulsifying oil drops 2 in the oil bearing waste water are negatively charged to have a ζ -potential caused by interfacial friction between the emulsifying oil drops 2 and the oil bearing waste water. The emulsifying oil drops 2 negatively charged are electrically attracted to and captured by the characteristic group 4 positively charged. The resin fiber 3 is capable of capturing and adsorbing the emulsifying oil drops 2 efficiently. The resin fibers 3 are in the form of network structure for capturing large size oil drops dispersed in the oil bearing waste water like the conventional resin fiber network structure.

As described above, it is preferable that the characteristic groups 4 comprise at least one of selected from the group consisting of amino groups, dialkylaminomethyl groups, dialkylaminoethyl groups and dialkylaminopropyl groups. In dialkylaminomethyl groups, dialkylaminoethyl groups and dialkylaminopropyl groups, the number of carbon atoms of alkyl group bonded with nitrogen is 1 to 2.

The resin fiber 3 is made of polymer polymerized with one or more monomers having such the characteristic group wherein the monomers comprise at least one of selected from the group consisting of acrylamide , N,N-dialkylaminomethyl-acrylamide, N,N-dialkylaminoethyl-acrylamide and N,N-dialkylaminopropyl-acrylamide.

In order to keep a high absorption ability for a long time, it is preferable that the resin fiber 3 is made of copolymer polymerized with acrylonitrile and one or more monomers having such the characteristic group wherein the monomers comprise at least one of selected from the group consisting of acrylamide , N,N-dialkylaminomethyl-acrylamide, N,N-dialkylaminoethyl-acrylamide and N,N-dialkylaminopropyl-acrylamide. A compositional ratio of the monomers having such the characteristic group to the copolymer is preferably in the range of 5-30 mol-% and more preferably in the range of 10-30 mol-%. It was confirmed that if the compositional ratio of the monomers having such the characteristic group to the copolymer is below 5 mol-%, then the adsorption ability is remarkably reduced. If, by contrast, the compositional ratio of the monomers having such the characteristic group to the copolymer is above 30 mol-%, then the resin fiber 3 may show hydrolysis. This results in deterioration of the resin fibers for treating the oil bearing waste water.

The above copolymer may be fabricated by the method already known. The compositional ratio of the copolymer may be controlled by controlling molar ratio of monomer in initiation of polymerization of the monomers.

The polymer or copolymer may be formed into the resin fibers 3 by a burst fiber method. The resin fibers 3 are porous fibers.

It is preferable that the diameter of the resin fibers 3 is as small as possible, for example, not more than 30 micrometers for increase in the contact surface area of the resin fibers 3 with the oil bearing waste water to obtain a large adsorption effect.

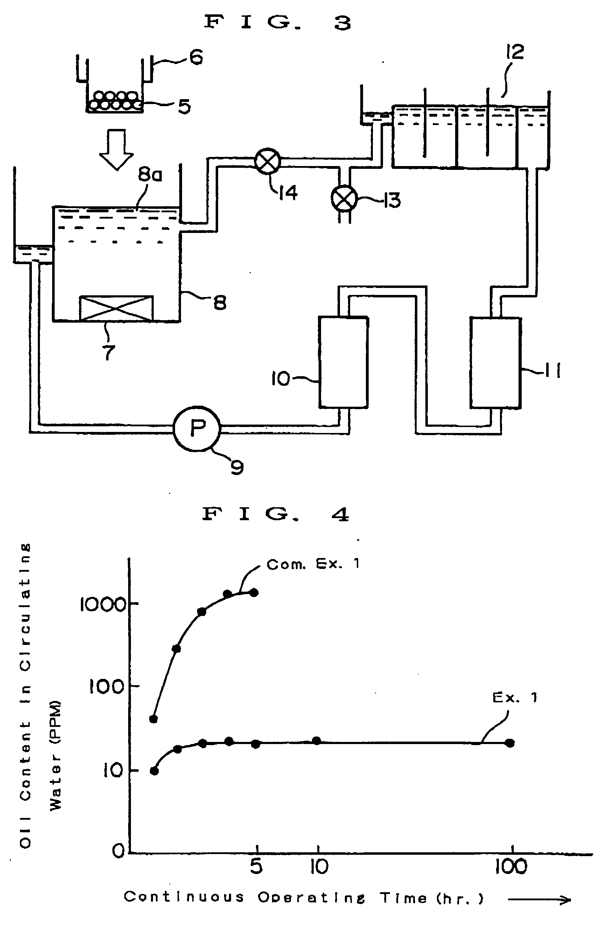

FIG. 3 is a view illustrative of an oil bearing waste water treatment system using the above novel resin fiber network structure in accordance with the present invention, wherein the oil bearing waste water is generated when punched parts adsorbed with process oil and machine oil are subjected to the ultrasonic cleaning with a cleaning liquid such as ion-exchange water. A cleaning bath 8 is filled with a cleaning liquid 8a. In the cleaning bath 8, an ultrasonic wave oscillator 7 is provided for emitting ultrasonic wave for ultrasonic wave cleaning. The cleaning liquid 8a comprises an ion-exchange water treated with an ion-exchange resin.

Cleaning samples 5 have been placed in a basket 6 before the basket 6 is immersed into the cleaning liquid 8a. The ultrasonic wave oscillator 7 is operated to emit the ultrasonic wave for ultrasonic wave cleaning of the cleaning samples 5. As a result, the used cleaning liquid 8a is the oil bearing waste water. The bearing waste water is fed by a pressure pump through a pre-filter 10 to an oil bearing waste water treating equipment 11.

The pre-filter 10 is provided for pre-treatment of the oil bearing waste water by use of a polyester system resin fiber network structure to adsorb large size oil drops in the oil bearing waste water. Thereafter, the oil bearing waste water is fed to the oil bearing waste water treating equipment 11 for subsequent treatment by use of the improved resin fibers which are capable of adsorbing the emulsifying oil drops in accordance with the adsorption mechanism described above.

The above pre-treatment may prevent the adsorption-saturation time from being shortened.

In the oil bearing waste water treating equipment 11, the above described improved resin fibers are in the form of the network structure which has a permeability in the range of 20-200 cc/cm²/sec. By use of the above described improved resin fibers, the fine oil drops such as emulsifying oil drops are adsorbed. The treated waste water is then fed to a specific gravity separation bath 12 so that when the resin fibers in the oil bearing waste water treating equipment 11 becomes saturated in adsorption ability, then the oils once adsorbed on the resin fiber 3 are released into the treated waste water by a feed pressure of the pressure pump 9 and then the released oils are floating on surface region of the treated waste water due to a difference in specific gravity between the oils and water. The specific gravity separation bath 12 can separate the oils from the waste water by utilizing the difference in specific gravity between them. When the oils floating on the surface of the waste water in the specific gravity separation bath 12 is observed, this means that the adsorption ability of the resin fibers is saturated and it is, therefore, required to replace the used resin fibers with fresh resin fibers. The used resin fibers may preferably be disposed by burning the same. The waste water from which any floating oils are removed are then circulated into the cleaning bath 8 for recycle use thereof.

The above system is capable of continuous operation because the oil bearing waste water are pre-treated in the pre-filter 10 and subsequently treated in the oil bearing waste water treating equipment 11 prior to the recycle of the waste water into the cleaning bath 8.

During the continuous operation of the above system, a discharge valve 13 remains closed whilst a circulation valve 14 remains opened so that the cleaning of the cleaning samples 5 in the cleaning bath 8 and the treatment of the oil bearing waste water are continued.

As described above, the resin fiber 3 to be used for treatment of oil bearing waste water has a molecular structure having the characteristic group 4 which is positively charged when exposed to oil bearing waste water including the emulsifying oil drops 2 negatively charged, for which reason the characteristic group 4 positively charged electrically attracts the emulsifying oil drops 2 negatively charged. Namely, the improved resin fibers 3 utilize the electric force to attract and adsorb the emulsifying oil drops 2, for which reason the above improved resin fibers 3 are superior in adsorption ability.

Further differently from the conventional resin fibers with nonionic surfactant having an affinity with emulsifying oil, in accordance with the present invention, the characteristic groups 4 are incorporated into the molecular structure of the resin fiber 3, for which reason there is no problem with release of oils into the waste water which has been once adsorbed on the resin fibers. The improved resin fibers keep its high adsorption ability for a long time. The improved resin fibers are also free from the problem with increase in the COD.

Further, the improved resin fibers 3 may be made of copolymer polymerized with acrylonitrile and the monomers having the characteristic group 4 for obtaining a stable and high adsorption ability for a long time. This improved resin fibers are also free from the problem with increase in the COD.

### EXAMPLE 1 :

### (Preparation of Oil Bearing Waste Water)

Polymerization was made with acrylonitrile and acrylamide as monomer having amino groups as characteristic groups at a compositional ratio of 10 mol-% of the monomer to copolymer in order to produce a copolymer. The produced copolymer was then formed by a burst fiber method into resin fibers having a diameter of not more than 30 micrometers to be used for treatment of the oil bearing waste water.

### (Preliminary Examination)

The produced resin fibers were placed in the oil bearing waste water treating equipment 11 in the cleaning system illustrated in FIG. 3 for preliminary examination. Punched parts adsorbed with process oils and machine oils were used as a cleaning sample. An ion-exchange water was used as a cleaning water 8a which has a conductivity of 0.5 µ S, a temperature of 50°C and a volume of the water of 0.1 m³.

The discharge valve 13 remains closed. The cleaning basket containing the cleaning samples 5 is immersed into the cleaning water 8a for cleaning the same by use of the ultrasonic wave oscillator 7 of 28kHz and 600W.

The oil contact of the treated waste water was measured by a carbon tetrachloride extract-infrared ray absorption photometry (JIS K-0102-25.2). The measured oil contact was 300 ppm. The oil drops in the waste water were observed by a polarization microscopy. It was confirmed that extremely fine emulsifying oil drops having a diameter of not more than 1 micrometer exist in the waste water.

The waste water was then fed through the pre-filter 10 to the oil bearing waste water treating equipment 11 for treatment of the same by the improved resin fibers 3. In the pre-filter 10, the conventional polyester system resin fiber network was provided. The oil bearing waste water treating equipment 11 used comprises a bath having an internal diameter of 0.3 m and a height of 0.6 m. The improved resin fibers were in the form of a network structure of a permeability of 80 cc/cm²/sec.

The treated waste water was then fed through the specific gravity separation bath 12 to the discharge valve 13 which was opened for sampling the treated waste water.

It was confirmed that the oil contacts in the pre-treated waste water was 10 ppm after the preliminary examination.

### (Continuous Operation Examination)

In the above system, the discharge valve 13 remains closed whilst the circulation valve 14 remains opened to observe variation of the oil contents during the continuous operation of the above system.

The cleaning cycle was set 5 minutes. A total amount of oils adsorbed on the samples in one basket 6 was 30g. A circulation flow rate was 20 liters/min.

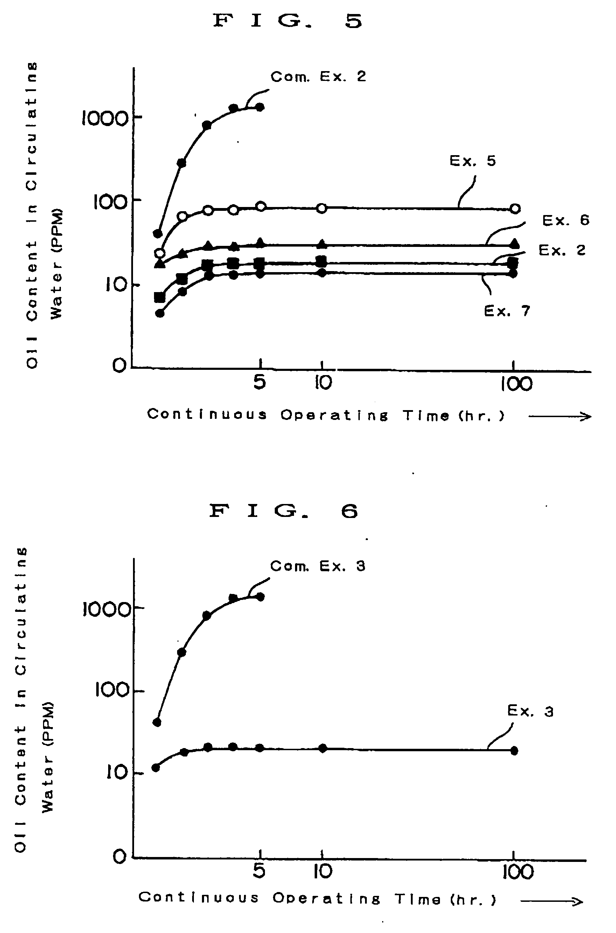

FIG. 4 illustrates variation in oil content in the waste water over the continuous operation time.

It was also confirmed that the oil contacts in the pre-treated waste water was 20 ppm after the continuous operation of the system for 160 hours.

### Comparative Example 1

The continuous operation examination was made under the same condition as Example 1, except for the use of the conventional polyester system resin fibers in the oil bearing waste water treating equipment 11.

After the continuous operation had been made for 4 hours, the oil content exceeded 1000 ppm and the operation was discontinued.

In FIG. 4, the oil content was increased remarkable by continuous operation.

It was confirmed that the improved resin fibers 3 keeps its high adsorption ability for long time.

### EXAMPLE 2 :

### (Preparation of Oil Bearing Waste Water)

Polymerization was made with acrylonitrile and N,N-dimethylaminomethyl-acrylamide as monomer having dimethylaminomethyl groups as characteristic groups at a compositional ratio of 10 mol-% of the monomer to copolymer in order to produce a copolymer. The produced copolymer was then formed by a burst fiber method into resin fibers having a diameter of not more than 30 micrometers to be used for treatment of the oil bearing waste water.

### (Preliminary Examination)

The produced resin fibers were placed in the oil bearing waste water treating equipment 11 in the cleaning system illustrated in FIG. 3 for preliminary examination. Punched parts adsorbed with process oils and machine oils were used as a cleaning sample. An ion-exchange water was used as a cleaning water 8a which has a conductivity of 0.5 µ S, a temperature of 50°C and a volume of the water of 0.1 m³.

The discharge valve 13 remains closed. The cleaning basket containing the cleaning samples 5 is immersed into the cleaning water 8a for cleaning the same by use of the ultrasonic wave oscillator 7 of 28kHz and 600W.

The oil contact of the treated waste water was measured by a carbon tetrachloride extract-infrared ray absorption photometry (JIS K-0102-25.2). The measured oil contact was 300 ppm. The oil drops in the waste water were observed by a polarization microscopy. It was confirmed that extremely fine emulsifying oil drops having a diameter of not more than 1 micrometer exist in the waste water.

The waste water was then fed through the pre-filter 10 to the oil bearing waste water treating equipment 11 for treatment of the same by the improved resin fibers 3. In the pre-filter 10, the conventional polyester system resin fiber network was provided. The oil bearing waste water treating equipment 11 used comprises a bath having an internal diameter of 0.3 m and a height of 0.6 m. The improved resin fibers were in the form of a network structure of a permeability of 80 cc/cm²/sec.

The treated waste water was then fed through the specific gravity separation bath 12 to the discharge valve 13 which was opened for sampling the treated waste water.

It was confirmed that the oil contacts in the pre-treated waste water was 7 ppm after the preliminary examination.

### (Continuous Operation Examination)

In the above system, the discharge valve 13 remains closed whilst the circulation valve 14 remains opened to observe variation of the oil contents during the continuous operation of the above system.

The cleaning cycle was set 5 minutes. A total amount of oils adsorbed on the samples in one basket 6 was 30g. A circulation flow rate was 20 liters/min.

FIG. 5 illustrates variation in oil content in the waste water over the continuous operation time.

It was also confirmed that the oil contacts in the pre-treated waste water was 17 ppm after the continuous operation of the system for 160 hours.

### Comparative Example 2

The continuous operation examination was made under the same condition as Example 2, except for the use of the conventional polyester system resin fibers in the oil bearing waste water treating equipment 11.

After the continuous operation had been made for 4 hours, the oil content exceeded 1000 ppm and the operation was discontinued.

In FIG. 5, the oil content was increased remarkable by continuous operation.

It was confirmed that the improved resin fibers 3 keeps its high adsorption ability for long time.

### EXAMPLE 3 :

### (Preparation of Oil Bearing Waste Water)

Polymerization was made with acrylonitrile and N,N-dimethylaminoethyl-acrylamide as monomer having dimethylaminoethyl groups as characteristic groups at a compositional ratio of 10 mol-% of the monomer to copolymer in order to produce a copolymer. The produced copolymer was then formed by a burst fiber method into resin fibers having a diameter of not more than 30 micrometers to be used for treatment of the oil bearing waste water.

### (Preliminary Examination)

The produced resin fibers were placed in the oil bearing waste water treating equipment 11 in the cleaning system illustrated in FIG. 3 for preliminary examination. Punched parts adsorbed with process oils and machine oils were used as a cleaning sample. An ion-exchange water was used as a cleaning water 8a which has a conductivity of 0.5 µ S, a temperature of 50°C and a volume of the water of 0.1 m³.

The discharge valve 13 remains closed. The cleaning basket containing the cleaning samples 5 is immersed into the cleaning water 8a for cleaning the same by use of the ultrasonic wave oscillator 7 of 28kHz and 600W.

The oil contact of the treated waste water was measured by a carbon tetrachloride extract-infrared ray absorption photometry (JIS K-0102-25.2). The measured oil contact was 300 ppm. The oil drops in the waste water were observed by a polarization microscopy. It was confirmed that extremely fine emulsifying oil drops having a diameter of not more than 1 micrometer exist in the waste water.

The waste water was then fed through the pre-filter 10 to the oil bearing waste water treating equipment 11 for treatment of the same by the improved resin fibers 3. In the pre-filter 10, the conventional polyester system resin fiber network was provided. The oil bearing waste water treating equipment 11 used comprises a bath having an internal diameter of 0.3 m and a height of 0.6 m. The improved resin fibers were in the form of a network structure of a permeability of 80 cc/cm²/sec.

The treated waste water was then fed through the specific gravity separation bath 12 to the discharge valve 13 which was opened for sampling the treated waste water.

It was confirmed that the oil contacts in the pre-treated waste water was 12 ppm after the preliminary examination.

### (Continuous Operation Examination)

In the above system, the discharge valve 13 remains closed whilst the circulation valve 14 remains opened to observe variation of the oil contents during the continuous operation of the above system.

The cleaning cycle was set 5 minutes. A total amount of oils adsorbed on the samples in one basket 6 was 30g. A circulation flow rate was 20 liters/min.

FIG. 6 illustrates variation in oil content in the waste water over the continuous operation time.

It was also confirmed that the oil contacts in the pre-treated waste water was 20 ppm after the continuous operation of the system for 160 hours.

### Comparative Example 3

The continuous operation examination was made under the same condition as Example 3, except for the use of the conventional polyester system resin fibers in the oil bearing waste water treating equipment 11.

After the continuous operation had been made for 4 hours, the oil content exceeded 1000 ppm and the operation was discontinued.

In FIG. 6, the oil content was increased remarkable by continuous operation.

It was confirmed that the improved resin fibers 3 keeps its high adsorption ability for long time.

### EXAMPLE 4 :

### (Preparation of Oil Bearing Waste Water)

Polymerization was made with acrylonitrile and N,N-dimethylaminopropyl-acrylamide as monomer having dimethylaminopropyl groups as characteristic groups at a compositional ratio of 10 mol-% of the monomer to copolymer in order to produce a copolymer. The produced copolymer was then formed by a burst fiber method into resin fibers having a diameter of not more than 30 micrometers to be used for treatment of the oil bearing waste water.

### (Preliminary Examination)

The produced resin fibers were placed in the oil bearing waste water treating equipment 11 in the cleaning system illustrated in FIG. 3 for preliminary examination. Punched parts adsorbed with process oils and machine oils were used as a cleaning sample. An ion-exchange water was used as a cleaning water 8a which has a conductivity of 0.5 µ S, a temperature of 50°C and a volume of the water of 0.1 m³.

The discharge valve 13 remains closed. The cleaning basket containing the cleaning samples 5 is immersed into the cleaning water 8a for cleaning the same by use of the ultrasonic wave oscillator 7 of 28kHz and 600W.

The oil contact of the treated waste water was measured by a carbon tetrachloride extract-infrared ray absorption photometry (JIS K-0102-25.2). The measured oil contact was 300 ppm. The oil drops in the waste water were observed by a polarization microscopy. It was confirmed that extremely fine emulsifying oil drops having a diameter of not more than 1 micrometer exist in the waste water.

The waste water was then fed through the pre-filter 10 to the oil bearing waste water treating equipment 11 for treatment of the same by the improved resin fibers 3. In the pre-filter 10, the conventional polyester system resin fiber network was provided. The oil bearing waste water treating equipment 11 used comprises a bath having an internal diameter of 0.3 m and a height of 0.6 m. The improved resin fibers were in the form of a network structure of a permeability of 80 cc/cm²/sec.

The treated waste water was then fed through the specific gravity separation bath 12 to the discharge valve 13 which was opened for sampling the treated waste water.

It was confirmed that the oil contacts in the pre-treated waste water was 8 ppm after the preliminary examination.

### (Continuous Operation Examination)

In the above system, the discharge valve 13 remains closed whilst the circulation valve 14 remains opened to observe variation of the oil contents during the continuous operation of the above system.

The cleaning cycle was set 5 minutes. A total amount of oils adsorbed on the samples in one basket 6 was 30g. A circulation flow rate was 20 liters/min.

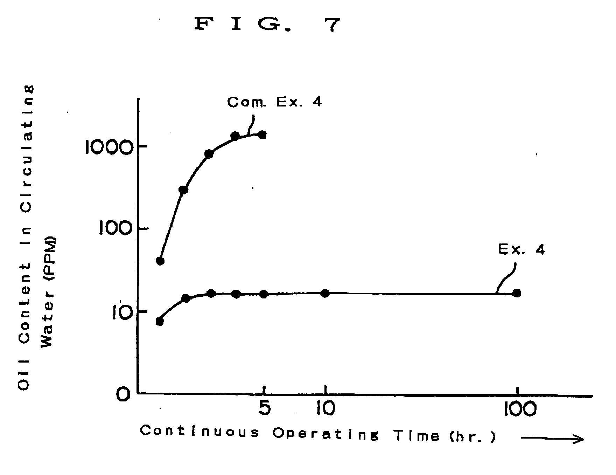

FIG. 7 illustrates variation in oil content in the waste water over the continuous operation time.

It was also confirmed that the oil contacts in the pre-treated waste water was 17 ppm after the continuous operation of the system for 160 hours.

### Comparative Example 4

The continuous operation examination was made under the same condition as Example 4, except for the use of the conventional polyester system resin fibers in the oil bearing waste water treating equipment 11.

After the continuous operation had been made for 4 hours, the oil content exceeded 1000 ppm and the operation was discontinued.

In FIG. 7, the oil content was increased remarkable by continuous operation.

It was confirmed that the improved resin fibers 3 keeps its high adsorption ability for long time.

### EXAMPLE 5 :

### (Preparation of Oil Bearing Waste Water)

Polymerization was made with acrylonitrile and N,N-dimethylaminomethyl-acrylamide as monomer having dimethylaminomethyl groups as characteristic groups at a compositional ratio of 3 mol-% of the monomer to copolymer in order to produce a copolymer. The produced copolymer was then formed by a burst fiber method into resin fibers having a diameter of not more than 30 micrometers to be used for treatment of the oil bearing waste water.

### (Preliminary Examination)

The produced resin fibers were placed in the oil bearing waste water treating equipment 11 in the cleaning system illustrated in FIG. 3 for preliminary examination. Punched parts adsorbed with process oils and machine oils were used as a cleaning sample. An ion-exchange water was used as a cleaning water 8a which has a conductivity of 0.5 µ S, a temperature of 50°C and a volume of the water of 0.1 m³.

The discharge valve 13 remains closed. The cleaning basket containing the cleaning samples 5 is immersed into the cleaning water 8a for cleaning the same by use of the ultrasonic wave oscillator 7 of 28kHz and 600W.

The oil contact of the treated waste water was measured by a carbon tetrachloride extract-infrared ray absorption photometry (JIS K-0102-25.2). The measured oil contact was 300 ppm. The oil drops in the waste water were observed by a polarization microscopy. It was confirmed that extremely fine emulsifying oil drops having a diameter of not more than 1 micrometer exist in the waste water.

The waste water was then fed through the pre-filter 10 to the oil bearing waste water treating equipment 11 for treatment of the same by the improved resin fibers 3. In the pre-filter 10, the conventional polyester system resin fiber network was provided. The oil bearing waste water treating equipment 11 used comprises a bath having an internal diameter of 0.3 m and a height of 0.6 m. The improved resin fibers were in the form of a network structure of a permeability of 80 cc/cm²/sec.

The treated waste water was then fed through the specific gravity separation bath 12 to the discharge valve 13 which was opened for sampling the treated waste water.

It was confirmed that the oil contacts in the pre-treated waste water was 25 ppm after the preliminary examination.

### (Continuous Operation Examination)

In the above system, the discharge valve 13 remains closed whilst the circulation valve 14 remains opened to observe variation of the oil contents during the continuous operation of the above system.

The cleaning cycle was set 5 minutes. A total amount of oils adsorbed on the samples in one basket 6 was 30g. A circulation flow rate was 20 liters/min.

FIG. 5 illustrates variation in oil content in the waste water over the continuous operation time.

It was also confirmed that the oil contacts in the pre-treated waste water was 90 ppm after the continuous operation of the system for 160 hours.

### Comparative Example 2

The continuous operation examination was made under the same condition as Example 2, except for the use of the conventional polyester system resin fibers in the oil bearing waste water treating equipment 11.

After the continuous operation had been made for 4 hours, the oil content exceeded 1000 ppm and the operation was discontinued.

In FIG. 5, the oil content was increased remarkable by continuous operation.

It was confirmed that the improved resin fibers 3 keeps its high adsorption ability for long time.

### EXAMPLE 6 :

### (Preparation of Oil Bearing Waste Water)

Polymerization was made with acrylonitrile and N,N-dimethylaminomethyl-acrylamide as monomer having dimethylaminomethyl groups as characteristic groups at a compositional ratio of 5 mol-% of the monomer to copolymer in order to produce a copolymer. The produced copolymer was then formed by a burst fiber method into resin fibers having a diameter of not more than 30 micrometers to be used for treatment of the oil bearing waste water.

### (Preliminary Examination)

The produced resin fibers were placed in the oil bearing waste water treating equipment 11 in the cleaning system illustrated in FIG. 3 for preliminary examination. Punched parts adsorbed with process oils and machine oils were used as a cleaning sample. An ion-exchange water was used as a cleaning water 8a which has a conductivity of 0.5 µ S, a temperature of 50°C and a volume of the water of 0.1 m³.

The discharge valve 13 remains closed. The cleaning basket containing the cleaning samples 5 is immersed into the cleaning water 8a for cleaning the same by use of the ultrasonic wave oscillator 7 of 28kHz and 600W.

The oil contact of the treated waste water was measured by a carbon tetrachloride extract-infrared ray absorption photometry (JIS K-0102-25.2). The measured oil contact was 300 ppm. The oil drops in the waste water were observed by a polarization microscopy. It was confirmed that extremely fine emulsifying oil drops having a diameter of not more than 1 micrometer exist in the waste water.

The waste water was then fed through the pre-filter 10 to the oil bearing waste water treating equipment 11 for treatment of the same by the improved resin fibers 3. In the pre-filter 10, the conventional polyester system resin fiber network was provided. The oil bearing waste water treating equipment 11 used comprises a bath having an internal diameter of 0.3 m and a height of 0.6 m. The improved resin fibers were in the form of a network structure of a permeability of 80 cc/cm²/sec.

The treated waste water was then fed through the specific gravity separation bath 12 to the discharge valve 13 which was opened for sampling the treated waste water.

It was confirmed that the oil contacts in the pre-treated waste water was 20 ppm after the preliminary examination.

### (Continuous Operation Examination)

In the above system, the discharge valve 13 remains closed whilst the circulation valve 14 remains opened to observe variation of the oil contents during the continuous operation of the above system.

The cleaning cycle was set 5 minutes. A total amount of oils adsorbed on the samples in one basket 6 was 30g. A circulation flow rate was 20 liters/min.

FIG. 5 illustrates variation in oil content in the waste water over the continuous operation time.

It was also confirmed that the oil contacts in the pre-treated waste water was 35 ppm after the continuous operation of the system for 160 hours.

### Comparative Example 2

The continuous operation examination was made under the same condition as Example 2, except for the use of the conventional polyester system resin fibers in the oil bearing waste water treating equipment 11.

After the continuous operation had been made for 4 hours, the oil content exceeded 1000 ppm and the operation was discontinued.

In FIG. 5, the oil content was increased remarkable by continuous operation.

It was confirmed that the improved resin fibers 3 keeps its high adsorption ability for long time.

### EXAMPLE 7 :

### (Preparation of Oil Bearing Waste Water)

Polymerization was made with acrylonitrile and N,N-dimethylaminomethyl-acrylamide as monomer having dimethylaminomethyl groups as characteristic groups at a compositional ratio of 30 mol-% of the monomer to copolymer in order to produce a copolymer. The produced copolymer was then formed by a burst fiber method into resin fibers having a diameter of not more than 30 micrometers to be used for treatment of the oil bearing waste water.

### (Preliminary Examination)

The produced resin fibers were placed in the oil bearing waste water treating equipment 11 in the cleaning system illustrated in FIG. 3 for preliminary examination. Punched parts adsorbed with process oils and machine oils were used as a cleaning sample. An ion-exchange water was used as a cleaning water 8a which has a conductivity of 0.5 µ S, a temperature of 50°C and a volume of the water of 0.1 m³.

The discharge valve 13 remains closed. The cleaning basket containing the cleaning samples 5 is immersed into the cleaning water 8a for cleaning the same by use of the ultrasonic wave oscillator 7 of 28kHz and 600W.

The oil contact of the treated waste water was measured by a carbon tetrachloride extract-infrared ray absorption photometry (JIS K-0102-25.2). The measured oil contact was 300 ppm. The oil drops in the waste water were observed by a polarization microscopy. It was confirmed that extremely fine emulsifying oil drops having a diameter of not more than 1 micrometer exist in the waste water.

The waste water was then fed through the pre-filter 10 to the oil bearing waste water treating equipment 11 for treatment of the same by the improved resin fibers 3. In the pre-filter 10, the conventional polyester system resin fiber network was provided. The oil bearing waste water treating equipment 11 used comprises a bath having an internal diameter of 0.3 m and a height of 0.6 m. The improved resin fibers were in the form of a network structure of a permeability of 80 cc/cm²/sec.

The treated waste water was then fed through the specific gravity separation bath 12 to the discharge valve 13 which was opened for sampling the treated waste water.

It was confirmed that the oil contacts in the pre-treated waste water was 6 ppm after the preliminary examination.

### (Continuous Operation Examination)

In the above system, the discharge valve 13 remains closed whilst the circulation valve 14 remains opened to observe variation of the oil contents during the continuous operation of the above system.

The cleaning cycle was set 5 minutes. A total amount of oils adsorbed on the samples in one basket 6 was 30g. A circulation flow rate was 20 liters/min.

FIG. 5 illustrates variation in oil content in the waste water over the continuous operation time.

It was also confirmed that the oil contacts in the pre-treated waste water was 15 ppm after the continuous operation of the system for 160 hours.

### Comparative Example 2

The continuous operation examination was made under the same condition as Example 2, except for the use of the conventional polyester system resin fibers in the oil bearing waste water treating equipment 11.

After the continuous operation had been made for 4 hours, the oil content exceeded 1000 ppm and the operation was discontinued.

In FIG. 5, the oil content was increased remarkable by continuous operation.

It was confirmed that the improved resin fibers 3 keeps its high adsorption ability for long time.

Whereas modifications of the present invention will be apparent to a person having ordinary skill in the art, to which the invention pertains, it is to be understood that embodiments as shown and described by way of illustrations are by no means intended to be considered in a limiting sense. Accordingly, it is to be intended to cover by claims any modifications of the present invention which fall within the spirit and scope of the present invention.

## Claims

1. A resin material to be used in the form of a fiber network structure for treatment of oil bearing waste water,
characterized in that the resin fiber has a molecular structure having a characteristic group which is positively charged when exposed to oil bearing waste water.

2. The resin material as claimed in claim 1, characterized in that the characteristic group comprises at least one of selected from the group consisting of amino groups, dialkylaminomethyl groups, dialkylaminoethyl groups and dialkylaminopropyl groups.

3. The resin material as claimed in claim 1, characterized in that the monomers having the characteristic group comprises at least one of selected from the group consisting of acrylamide, N,N-dialkylaminomethyl-acrylamide, N,N-dialkylaminoethyl-acrylamide and N,N-dialkylaminopropyl-acrylamide.

4. A resin material to be used in the form of for treatment of oil bearing waste water,
characterized in that the resin fiber is made of a polymer polymerized with monomers having a characteristic group which is positively charged when exposed to oil bearing waste water.

5. The resin material as claimed in claim 4, characterized in that the characteristic group comprises at least one of selected from the group consisting of amino groups, dialkylaminomethyl groups, dialkylaminoethyl groups and dialkylaminopropyl groups.

6. The resin material as claimed in claim 4, characterized in that the monomers having the characteristic group comprises at least one of selected from the group consisting of acrylamide, N,N-dialkylaminomethyl-acrylamide, N,N-dialkylaminoethyl-acrylamide and N,N-dialkylaminopropyl-acrylamide.

7. A resin material to be used in the form of fiber network structure for treatment of oil bearing waste water,
characterized in that the resin fiber is made of a copolymer polymerized with acrylonitrile and monomers having a characteristic group which is positively charged when exposed to oil bearing waste water.

8. The resin material as claimed in claim 7, characterized in that a compositional ratio of the monomers having the characteristic group is in the range of 5-30%.

9. The resin material as claimed in claim 7, characterized in that the characteristic group comprises at least one of selected from the group consisting of amino groups, dialkylaminomethyl groups, dialkylaminoethyl groups and dialkylaminopropyl groups.

10. The resin material as claimed in claim 7, characterized in that the monomers having the characteristic group comprises at least one of selected from the group consisting of acrylamide, N,N-dialkylaminomethyl-acrylamide, N,N-dialkylaminoethyl-acrylamide and N,N-dialkylaminopropyl-acrylamide.
